# EUROPEAN PATENT SPECIFICATION

(11) **EP 2 104 556 B1**
(45) Date of publication and mention of the grant of the patent: **09.10.2019**
(21) Application number: 07869500.4
(22) Date of filing: 19.12.2007
(51) Int. Cl.: B01J 2/00, B01J 35/00, B01J 37/02, C04B 41/50, C09D 183/02, C09D 183/04, B01J 21/06, B01D 53/86, C08K 3/22

(54) **COATED ROOFING GRANULE**
BESCHICHTETES DACHGRANULAT
GRANULES DE TOITURE REVÊTU

(30) Priority: 22.12.2006 US 871583 P
(43) Date of publication of application: 30.09.2009
(73) Proprietor: 3M Innovative Properties Company, St. Paul, MN 55133-3427 (US)
(72) Inventor: BAI, Feng, Saint Paul, Minnesota 55133-3427 (US); GOULD, Rachael A. T., Saint Paul, Minnesota 55133-3427 (US); ANDERSON, Mark T., Saint Paul, Minnesota 55133-3427 (US)
(74) Representative: Vossius & Partner Patentanwälte Rechtsanwälte mbB
(86) International application number: PCT/US2007/088099
(87) International publication number: WO 2008/079865

(56) References cited:
- EP-A1- 1 118 385
- WO-A1-01/71121
- JP-A- 08 318 166
- JP-A- 11 226 419
- JP-A- 11 246 787
- JP-A- 2000 288 407
- JP-A- 2001 031 907
- JP-A- 2001 089 706
- JP-A- 2003 205 244
- JP-A- 2003 268 307
- US-A1- 2002 182 334

## Description

### Field of Invention

The present invention relates to a coated roofing granule and a method of making thereof.

### Background

Discoloration of construction surfaces due to algae growth or other agents has been a problem for the construction industry for many years. Discoloration has been attributed to the presence of blue-green algae and other airborne contaminants, such as soot and grease.

One approach to combating this problem is to coat the construction surfaces with a composition that contains photocatalysts and a binder, typically a silicate binder. When exposed to sunlight, the photocatalysts may photo-oxidize the organic materials that cause the discoloration.

Photocatalytic titanium dioxide (TiO₂) particles can be used, for example, in roofing granules, to provide photocatalytic activity. To achieve long-term photocatalytic performance, a relatively high amount of silicate can be used in the coating composition. This may impact the color of the coated granules and reduce their photoactivity.

JP H11-246787 A discloses a silica film having a porous structure, wherein an oxidized titanium fine particle having a photocatalytic activity is dispersed. The film is formed by using a coating composition containing an aqueous solution of an alkali metal silicate, an oxidized titanium fine particle having a photocatalytic activity and a foaming agent which generates carbon dioxide, or by blowing in carbon dioxide instead of a foaming agent while coating, heat drying and then washing with water.

JP 2001-031907 A relates to a coating film composed of a photocatalyst layer and an interlayer, which uses, in the interlayer, a water-based coating composition comprising an alkali metal silicate, a surfactant and an acrylsilicone or an alkylalkoxysilane as the major components and, in the photocatalyst layer, a water-based coating composition comprising a photocatalyst, an alkali metal silicate, a surfactant, an acrylsilicone or an alkylalkoxysilane as the major components.

WO 01/71121 is directed to roofing granules comprising: a plurality of coated roofing granules, each of said coated roofing granules including an inorganic granule and a coating applied onto an outer surface of said inorganic granule, said coating including an amount of a silicate binder sufficient to bind said coating to said inorganic granule, and said coating including a plurality of photocatalytic particles.

EP 1 118 385 A refers to a process for producing a functional material having photocatalytic activity, comprising the steps of: coating a photocatalyst coating composition comprising a photocatalytic metal oxide and/or a precursor of the photocatalytic metal oxide onto the surface of a substrate; and rapidly heating the surface of the coated substrate to fix the photocatalytic metal oxide onto the surface of the substrate.

JP 2001-089706 A refers to a photocatalytic hydrophilic coating agent comprising water, (A) a photocatalytic metal oxide, (B) an alkyl silicate and (C) an alkali silicate, regulated so that the ratio of the solids of TiO₂ to SiO₂ may be (2/8) to (8/2), and the content of the alkali metal silicate based on 100 wt.% of the whole solid components may be 10 to 40 wt.%.

### Summary

The present invention is directed to a coated roofing granule and a method of making the coated roofing granule.

The coating composition used in the method of the present invention is as defined in claim 1 and generally includes photocatalytic particles and an alkali metal silicate binder comprising an alkoxysilane.

The photocatalytic particles comprise photocatalytic TiO₂ particles. Particularly preferred photocatalysts include crystalline anatase TiO₂, crystalline rutile TiO₂, and combinations thereof. Crystalline ZnO can also be used in combination therewith.

The photocatalytic particles used in the coating composition typically have a mean particle size in the range of about 1 nm to about 1000 nm. Preferred mean particle size is in the range of about 1 nm to about 200 nm, with a most preferred range of about 1 nm to about 100 nm. The coating composition has a solid weight percentage of the photocatalytic particles in the range of 30% to 80%, with a preferred range of 40% to 70%. Alkali metal silicate binders suitable for use with the present invention include lithium silicate, sodium silicate, potassium silicate, and combinations thereof.

Representative alkoxysilanes suitable for use with the present invention include any compounds having a structural unit of Si(R₁)ₙ(OR₂)₄₋ₙ or dimers or oligomers formed from this structural unit, or combinations thereof, where R₁ and R₂ are independent organic groups having carbon number from 1 to 18, and n is an integer from 0 to 2. According to the present invention, the alkoxysilane comprises tetraethoxysilane (TEOS). The solid weight percentage of the alkoxysilane used in the coating composition is more than 10%, with a preferred percentage of more than 15%.

Applying the coating composition onto a roofing granule followed by heating to elevated temperatures in a rotary kiln, oven or other suitable apparatus, produces a photocatalytic coating with improve durability. Roofing granules are susceptible to discoloration due to algae growth or other agents, such as airborne particulates of dust, dirt, soot, pollen or the like. The durability of the resulting coating measured using the Coating Durability Test described in the Examples section may be more than about 70%, more preferably more than about 90%, and most preferably about 100%.

### Detailed Description

The present invention is directed to a coated roofing granule having a photocatalytic coating with improved durability. In the present invention, the durability of a photocatalytic coating is characterized using the Coating Durability Test described in the Examples section.

The photocatalytic coating is formed by applying the coating composition set out in claim 1 onto the base article (roofing granule), followed by heating to elevated temperatures of at least about 170°C and up to about 650 °C, with a preferred temperature of about 200 °C to about 450 °C. The coating protects the roofing granule against discoloration caused by algae growth or other agents. For purposes of the present invention, the coating may have multiple layers.

The roofing granule of the present invention can be any ceramic, metallic, or polymeric materials or composites thereof that are capable of withstanding temperatures of at least about 170 °C. Building materials are susceptible to discoloration due to algae infestation or other agents, such as airborne particulates of dust, dirt, soot, pollen or the like. Disclosed examples include roofing materials, concrete and cement based materials, plasters, asphalts, ceramics, stucco, grout, plastics, metals or coated metals, glass, or combinations thereof. Additional examples include pool surfaces, wall coverings, siding materials, flooring, filtration systems, cooling towers, buoys, seawalls, retaining walls, boat hulls, docks, and canals. According to the invention the article is roofing granules, such as those formed from igneous rock, argillite, greenstone, granite, trap rock, silica sand, slate, nepheline syenite, greystone, crushed quartz, slag, or the like, and having a particle size in the range from about 300 µm to about 5000 µm in diameter. Roofing granules are often partially embedded onto a base roofing material, such as, for example, asphalt-impregnated shingles, to shield the base material from solar and environmental degradation. Another disclosed article is tiles, such as those formed from ceramics, stones, porcelains, metals, polymers, or composites thereof. Tiles are often used for covering roofs, ceilings, floors, and walls, or other objects such as tabletops to provide wear, weather and/or fire resistances.

Photocatalysts arc included in the coating composition. Upon activation or exposure to sunlight, photocatalysts are thought to establish both oxidation and reduction sites. These sites are thought to produce highly reactive species such as hydroxyl radicals that are capable of preventing or inhibiting the growth of algae or other biota on the coated article, especially in the presence of water. According to the invention the photocatalyst comprises TiO₂ particles. Many photocatalysts conventionally recognized by those skilled in the art are suitable for use in combination with the TiO₂ particles of the present invention. Preferred photocatalysts include transition metal photocatalysts. Examples of suitable transition metal photocatalsysts include ZnO, WO₃, SnO₂, CaTiO₃, Fe₂O₃, MoO₃, Nb₂O₅, TiₓZr₍₁₋ₓ₎O₂, SiC, SrTiO₃, CdS, GaP, InP, GaAs, BaTiO₃, KNbO₃, Ta₂O₅, Bi₂O₃, NiO, Cu₂O, SiO₂, MoS₂, InPb, RuO₂, CeO₂, Ti(OH)₄, and combinations thereof. Particularly preferred photocatalysts include crystalline anatase TiO₂, crystalline rutile TiO₂ and combinations thereof. Crystalline ZnO can be used in combination therewith.

To improve spectral efficiency, photocatalysts may be doped with a nonmetallic element, such as C, N, S, F, or with a metal or metal oxide, such as Pt, Pd, Au, Ag, Os, Rh, RuO₂, Nb, Cu, Sn, Ni, Fe, or combinations thereof.

Photocatalytic particles may be characterized by mean particle size which can be determined using electron microscopy under ASTM D3849. The present invention typically uses photocatalytic particles having a mean particle size in the range of about 1 nm to about 1000 nm. Preferred mean particle size is in the range of about 1 nm to about 200 nm, with a most preferred range of about 1 nm to about 100 nm. Such photocatalytic particles have relatively large surface area per weight of particles and thus likely provide high photoactivity.

The coating composition has a solid weight percentage of photocatalytic particles in the range of 30% to 80%, with a preferred range of 40% to 70%.

Examples of suitable alkali metal silicate binders include lithium silicate, sodium silicate, potassium silicate, and combinations thereof. Alkali metal silicate is generally denoted as M₂O:SiO₂, where M is lithium, sodium, or potassium. The weight ratio of SiO₂ to M₂O may range from about 1.4:1 to about 3.75:1. A preferred weight ratio is in the range of about 2.75:1 to about 3.22:1.

The alkali metal silicate binder comprises an alkoxysilane which comprises tetraethoxysilane (TEOS). Typical further alkoxysilane compounds useful in the present invention include those having a structural unit of Si(R₁)ₙ(OR₂)₄₋ₙ or dimers or oligomers formed from this structural unit or combinations thereof, where R₁ and R₂ are independent organic groups having carbon number from 1 to 18, and n is an integer from 0 to 2. As used herein, the term "organic group" means a hydrocarbon group (with optional elements other than carbon and hydrogen, such as oxygen, nitrogen, sulfur, and halogens) such as aliphatic groups, cyclic groups, or combinations of aliphatic and cyclic groups (e.g., alkaryl and aralkyl groups). The term "aliphatic group" means a saturated or unsaturated linear or branched hydrocarbon group. This term encompasses, for example, alkyl, alkenyl and alkynyl groups. The term "alkyl group" means a saturated linear or branched hydrocarbon group including, for example, methyl, ethyl, isopropyl, t-butyl, hexyl, heptyl, dodecyl, octadecyl, amyl, 2-ethylhexyl, and the like. The term "alkenyl group" means an unsaturated linear or branched hydrocarbon group with one or more carbon-carbon double bonds, such as a vinyl group. The term "alkynyl group" means an unsaturated linear or branched hydrocarbon group with one or more carbon-carbon triple bonds. The term "cyclic group" means a closed ring hydrocarbon group that is classified as an alicyclic group, aromatic group, or heterocyclic group. The term "alicyclic group" means a cyclic hydrocarbon group having properties resembling those of aliphatic groups. The term "aromatic group" or "aryl group" means a mono or polynuclear aromatic hydrocarbon group, including alkaryl and aralkyl groups. The term "heterocyclic group" means a closed ring hydrocarbon in which one or more of the atoms in the ring is an element other than carbon (e.g., nitrogen, oxygen, sulfur, etc.).

Examples of suitable further alkoxysilanes include methyltrimethoxysilane, methyltriethoxysilane, ethyltrimethoxysilane, ethyltriethoxysilane, propyltrimethoxysilane, propyltriethoxysilane, isobutyltrimethoxysilane, pentyltriethoxysilane, octyltriethoxysilane, octadecyltrimethoxysilane, octadecyltriethoxysilane, phenyltriethoxysilane, vinyltrimethoxysilane, and vinyltriethoxysilane, tetramethoxysilane, tetrapropoxysilane, tetraisopropoxysilane, tetrabutoxysilane, tetrakis(*s*-butoxy)silane, tetrakis(2-ethyl-butoxy)silane, tetrakis(2-ethyl-hexoxy)silane, tetrakis(2-methoxy-ethoxy)silane, tetraphenoxysilane, hexaethoxydisiloxane, tetracetoxysilane, methyltriacetoxysilane, cthyltriacctoxysilanc, di-*t*-butoxydiacetoxysilane, and combinations thereof.

The use of an alkoxysilane enhances the durability of the photocatalytic coating. Traditional approach to improving the durability of photocatalytic coatings is to increase the amount of alkali metal silicate used in the coating composition. In general, this has the effect of reducing the photoactivity of the coating, and in some cases, may also lighten the color. In contrast, the use of tetraethoxysilane (TEOS) in the present invention produces good binding durability between, for example, the TiO₂ particles and the base granules. Consequently, the resulting photocatalytic coating has relatively long-term photocatalytic performance without substantially sacrificing vivid color and high photoactivity of the coated granules. Specifically, the use of tetraethoxysilane (TEOS) in the present invention can result that the durability of the photocatalytic coating as measured using the Coating Durability Test described in the Examples section is more than about 70%, more preferably more than about 90%, and most preferably about 100%. To achieve enhanced durability, the solid weight percentage of the alkoxysilane in the coating composition is more than 10%, with a preferred percentage of more than 15%.

The durability of the photocatalytic coating can also be enhanced by adding a boric acid, borate, or combination thereof to the coating composition, as disclosed in US 2010/0152030A1 (3M Patent Application No. 62617US002), filed on December 22, 2006.

A pigment, or combination of pigments, may be included in the coating composition to achieve a desired color. Suitable pigments include conventional pigments, such as carbon black, titanium dioxide, chromium oxide, yellow iron oxide, phthalocyanine green and blue, ultramarine blue, red iron oxide, metal ferrites, and combinations thereof.

The photocatalytic coating of the present invention can be transparent, as disclosed in US 2010/0190633A 1 (3M Patent Application No. 62618US002), filed on December 22, 2006.

### Examples

The operation of the present invention will be further described with regard to the following detailed examples. These examples arc offered to further illustrate the various specific and preferred embodiments and techniques. It should be understood, however, that many variations and modifications may be made while remaining within the scope of the present invention.

### Photocatalytic Activity Test

The granules were sieved through a -16/+20 mesh, washed 5 times by deionized water and then dried at 240 °F (∼116 °C) for about 20 minutes. 40 g of the dried granules was placed into a 500 mL crystallization dish. 500 g of 4x10⁻⁴ M aqueous disodium terephthalate solution was then added to the dish. The mixture was stirred using a magnetic bar placed in a submerged small Petri dish and driven by a magnetic stirrer underneath the crystallization dish. The mixture was exposed to UV light produced by an array of 4, equally spaced, 4-ft (1.2-m) long black light bulbs (Sylvania 350 BL 40W F40/350BL) that were powered by two specially designed ballasts (Action Labs, Woodville, WI). The height of the bulbs was adjusted to provide about 2.3 mW/cm² UV flux measured using a VWR Model 21800-016 UV Light Meter (VWR International, West Chester, PA) equipped with a UVA Model 365 Radiometer (Solar Light Company, Glenside, PA) having a wavelength band of 320-390 nm.

During irradiation, about 3 mL of the mixture was removed with a pipet at about 5-minute intervals and transferred to a disposable 4-window polymethylmethacrylate or quartz cuvette. The mixture in the cuvette was then placed into a Fluoromax-3 spectrofluorimeter (Jobin Yvon, Edison, NJ). The fluorescence intensity measured at excitation wavelength of 314 nm and emission wavelength of 424 nm was plotted against the irradiation time. The slope of the linear portion (the initial 3-5 data points) of the curve was indicative of the photocatalytic activity of the mixture. A comparison of this slope with that for the aqueous disodium terephthalate solution provided the relative photoactivity of the granules as reported. In general, the larger the reported value, the greater the photoactivity of the granules.

### Coating Durability Test

The granules were sieved through a -16/+20 mesh. 50 g of the granules without washing was added to a four oz. (113g) glass jar. The jar was then placed onto a motorized roller (available from Bodine Electric Company, Chicago, IL) tilted at an angle of about 17 degree to the floor plane and kept rolling for one hour at a rolling speed of about 35 rpm. The rolled granules were washed with deionized water and their photoactivity was measured according to the Photocatalytic Activity Test described above. The photoactivity of the unrolled granules was also measured. The photoactivity ratio (expressed in percentage) of the rolled granules to the unrolled granules was reported as "durability". The higher the ratio, the more durable the coating.

### Working Example 1 and Comparative Examples A-D

The sample for Working Example 1 was prepared as follows. 1.50 g of aqueous dispersion of TiO₂ (STS-21, available from Ishihara Sangyo Kaisha, Japan), 50.59 g of deionized water, 0.75 g of sodium silicate (Sodium Silicate PD, 37 wt% with 2.75 wt% ratio of SiO₂/Na₂O, available from PQ Corporation, Valley Forge, PA), and 8.66 g of a freshly prepared dispersion of tetraethoxysilane (TEOS, 98%, available from Sigma-Aldrich, St. Louis, MO) in ethanol/water (the molar ratio of the dispersion is TEOS:EtOH:H₂O = 1:40.7:53.6) were added to a 250 mL vessel and mixed well. The resulting mixture was then slowly poured onto 1000 g of stirring WA 5100 granules (untreated, available from 3M Company, St. Paul, MN), which had been pre-heated to 210 °F (∼99 °C) for one hour. While pouring, the granules were mixed to ensure an even coating. The granules were further stirred for about 2 minutes. The granules were then heated with a heat gun until they appeared to be dry and loose. The dried granules were then fired in a rotary kiln (natural gas/oxygen flame) to 800 °F (∼427 °C), and removed and allowed to cool to room temperature. The samples for Comparative Examples A-D were prepared using the same procedure except that different coating compositions were used. The compositions of the photocatalytic coatings for Working Example 1 and Comparative Examples A-D are listed in Table 1.

The durability of the cooled granules was measured according to the testing procedure described above, and reported in Table 1. The results show that use of tetraethoxysilane (TEOS) in combination with sodium silicate substantially increases the durability.

**Table 1**

| Compositions of Photocatalytic Coating and Durability of Coated Granules for Working Example 1 and Comparative Examples A-D. | | | | | | | | |
|---|---|---|---|---|---|---|---|---|
| Example | STS-21 (g) | DI H₂O (g) | Sodium Silicate PD (g) | Clay (g) | Tetraethoxysilane Mixture (g) | Firing Temp (°F) | Photoactivity (before rolling) | Durability (%) |
| 1 | 1.50 | 50.59 | 0.75 | 0 | 8.66 | 800 | 1.44x10⁵ | 100 |
| A | 1.50 | 60.00 | 0.75 | 0.19^{a} | 0 | 800 | 1.87x10⁵ | 58 |
| B | 1.50 | 60.00 | 0.75 | 0.19^{b} | 0 | 800 | 2.15x10⁵ | 64 |
| C | 1.50 | 51.34 | 0 | 0 | 8.66 | 800 | 2.47x10⁵ | 65 |
| D | 1.50 | 51.15 | 0 | 0.19^{b} | 8.66 | 800 | 2.16x10⁵ | 61 |

| | | | | | | | | |
|---|---|---|---|---|---|---|---|---|
| ^{a} Dover clay, available from Grace Davison, Columbia, Maryland. ^{b} Cloisite 20A clay, available from Southern Clay Products, Gonzales, TX. 800°F corresponds to 427°C | | | | | | | | |

### Working Examples 2-5

The samples for Working Examples 2-5 were prepared using the same procedure as that for preparing the sample for Working Example 1. The compositions of the photocatalytic coatings for Working Examples 2-5 are listed in Table 2. Compared with Working Example 1, Grade #11 uncoated granules (available from 3M Company, St. Paul, MN) were used in Working Examples 2-5. Furthermore, the samples for Working Examples 3&5 were fired at 400 °F (∼204 °C) instead of 427°C (800°F).

The durability of the coated granules was measured and reported in Table 2. The results also show that use of tetraethoxysilane (TEOS) in combination with sodium silicate substantially increases the durability.

**Table 2**

| Compositions of Photocatalytic Coating and Durability of Coated Granules for Working Examples 2-5. | | | | | | | | |
|---|---|---|---|---|---|---|---|---|
| Example | STS-21 (g) | DI H₂O (g) | Sodium Silicate PD (g) | Potassium Tetrafluoroborate (g) | Tetraethoxysilane Mixture (g) | Firing Temp (°F) | Photoactivity (before rolling) | Durability (%) |
| 2 | 1.50 | 50.59 | 0.75 | 0 | 8.66 | 800 | 3.88x10⁵ | 96 |
| 3 | 1.50 | 50.59 | 0.75 | 0 | 8.66 | 400 | 3.46x10⁵ | 93 |
| 4 | 1.50 | 50.59 | 0.75 | 0.11 | 8.66 | 800 | 3.37x10⁵ | 88 |
| 5 | 1.50 | 50.59 | 0.75 | 0.11 | 8.66 | 400 | 3.46x10⁵ | 97 |

| | | | | | | | | |
|---|---|---|---|---|---|---|---|---|
| 800°F corresponds to 427°C 400°F corresponds to 204°C | | | | | | | | |

### Working Examples 6-9

The samples for Working Examples 6-9 were prepared using the same procedure as that for preparing the sample for Working Example 1. The compositions of the photocatalytic coatings for Working Examples 6-9 are listed in Table 3. Compared with Working Example 1, Grade #11 uncoated granules were used in Working Examples 6-9. Also, an acidic aqueous TEOS solution was used in Working Examples 6-9. This solution was prepared by adding 43.20 g of deionized water, 10.00 g of 98% TEOS, and one drop of 68-70% nitric acid assay (HNO₃) (available from EM Industries, Gibbstown, NJ) to a 100 mL glass bottle, followed by magnetic stirring at room temperature for 60 minutes. Furthermore, potassium silicate was used in Working Examples 7&8 in place of sodium silicate. Moreover, the samples for Working Examples 8&9 were fired at 500 °F (260 °C) instead of 800 °F (427°C).

The durability of the coated granules was measured and reported in Table 3. The results show that use of tetraethoxysilane (TEOS) in combination with sodium or potassium silicate leads to excellent durability.

**Table 3**

| Compositions of Photocatalytic Coating and Durability of Coated Granules for Working Examples 6-9. | | | | | | | |
|---|---|---|---|---|---|---|---|
| Example | STS-21 (g) | DI H₂O (g) | Silicate (g) | Tetraethoxysilane Mixture (g) | Firing Temp (°F) | Photoactivity (before rolling) | Durability (%) |
| 6 | 1.50 | 50.59 | 0.75^{a} | 3.15 | 800 | 4.16x10⁵ | 84 |
| 7 | 1.50 | 50.59 | 1.44^{b} | 3.15 | 800 | 3.98x10⁵ | 90 |
| 8 | 1.50 | 50.59 | 0.75^{a} | 3.15 | 500 | 4.07x10⁵ | 91 |
| 9 | 1.50 | 50.59 | 1.44^{b} | 3.15 | 500 | 4.04x10⁵ | 91 |

| | | | | | | | |
|---|---|---|---|---|---|---|---|
| ^{a} Sodium Silicate PD. ^{b} Potassium Silicate Kasil 1, 28.91 wt% with 2.47 wt% ratio of SiO₂/K₂O, available from PQ Corporation. 800°F corresponds to 427°C 500°F corresponds to 260°C | | | | | | | |

The tests and test results described above are intended solely to be illustrative, rather than predictive, and variations in the testing procedure can be expected to yield different results. The present invention has now been described with reference to several embodiments thereof. The foregoing detailed description and examples have been given for clarity of understanding only. No unnecessary limitations are to be understood therefrom.

It will be apparent to those skilled in the art that many changes can be made in the embodiments described without departing from the scope of the invention. Thus, the scope of the present invention should not be limited to the exact details and structures described herein, but rather by the structures described by the language of the claims.

## Claims

1. A coated roofing granule, comprising:
a roofing granule having an external surface and a coating on the external surface of the roofing granule, wherein the coating is formed from a coating composition comprising:
photocatalytic TiO₂ particles and an alkali metal silicate binder, wherein the alkali metal silicate binder further comprises an alkoxysilane which comprises tetraethoxysilane;
wherein the coating composition has a solid weight percentage of photocatalytic particles in the range of 30% to 80% and the coating composition has a solid weight percentage of the alkoxysilane of more than 10%.

2. The coated roofing granule of claim 1, wherein the alkali metal silicate binder further comprises a pigment.

3. A method of making a coated roofing granule as defined in claim 1 or 2, comprising:
providing a roofing granule having an external surface;
providing a coating composition;
depositing the coating composition onto the roofing granule; and
heating the roofing granule having the deposited coating composition to form a coating thereon.

## Patentansprüche

1. Ein beschichtetes Dachgranulat, umfassend:
ein Dachgranulat mit einer Außenoberfläche und einer Beschichtung auf der Außenoberfläche des Dachgranulats, wobei die Beschichtung von einer Beschichtungszusammensetzung gebildet ist, umfassend:
photokatalytische TiO₂-Teilchen und ein Alkalimetallsilikat-Bindemittel, wobei das Alkalimetallsilikat-Bindemittel ferner ein Alkoxysilan umfasst, das Tetraethoxysilan umfasst;
wobei die Beschichtungszusammensetzung einen Feststoffgewichtsprozentsatz von photokatalytischen Teilchen im Bereich von 30 % bis 80 % aufweist und die Beschichtungszusammensetzung einen Feststoffgewichtsprozentsatz des Alkoxysilans von mehr als 10 % aufweist.

2. Das beschichtete Dachgranulat nach Anspruch 1, wobei das Alkalimetallsilikat-Bindemittel ferner ein Pigment umfasst.

3. Ein Verfahren zum Herstellen eines beschichteten Dachgranulats wie in Anspruch 1 oder 2 definiert, umfassend:
Bereitstellen eines Dachgranulats mit einer Außenoberfläche;
Bereitstellen einer Beschichtungszusammensetzung;
Aufbringen der Beschichtungszusammensetzung auf das Dachgranulat; und
Erwärmen des Dachgranulats mit der aufgebrachten Beschichtungszusammensetzung, um eine Beschichtung darauf zu bilden.

## Revendications

1. Granule de toiture revêtu, comprenant :
un granule de toiture ayant une surface externe et un revêtement sur la surface externe du granule de toiture, dans lequel le revêtement est formé à partir d'une composition de revêtement comprenant :
des particules photocatalytiques de TiO₂ et un liant silicate de métal alcalin, dans lequel le liant silicate de métal alcalin comprend en outre un alcoxysilane qui comprend du tétra-éthoxysilane ;
dans lequel la composition de revêtement a un pourcentage en poids solide de particules photocatalytiques dans la plage de 30 % à 80 % et la composition de revêtement a un pourcentage en poids solide de l'alcoxysilane de plus de 10 %.

2. Granule de toiture revêtu selon la revendication 1, dans lequel le liant silicate de métal alcalin comprend en outre un pigment.

3. Procédé de fabrication d'un granule de toiture revêtu tel que défini dans la revendication 1 ou 2, comprenant :
la fourniture d'un granule de toiture ayant une surface externe ;
la fourniture d'une composition de revêtement ;
le dépôt de la composition de revêtement sur le granule de toiture ; et
le chauffage du granule de toiture ayant la composition de revêtement déposée pour former un revêtement sur celui-ci.
